# EUROPEAN PATENT APPLICATION

(11) **EP 0 691 605 A1**
(43) Date of publication of application: **10.01.1996**
(21) Application number: 95108603.2
(22) Date of filing: 06.06.1995
(51) Int. Cl.: G06F 3/033

(54) **Method and system for management of multiple desktop environments in a data processing system**

(30) Priority: 06.07.1994 US 271340
(71) Applicant: International Business Machines Corporation, Armonk, N.Y. 10504 (US)
(72) Inventor: Johnson, William J., Flower Mound, Texas 75028 (US); Weber, Owen W., Coppell, Texas 75019 (US)
(74) Representative: Schäfer, Wolfgang, Dipl.-Ing.

(57) **Abstract**

A method and system for management of multiple desktop environments within a data processing system which includes a display, a graphical pointing device, and multiple hierarchically related electronic desktop environments wherein each desktop environment includes multiple files and/or applications and graphic representations of various accessory devices which are available within that desktop environment. A selectable icon is displayed within each desktop environment which represents each adjoining desktop environment below the current desktop environment within the hierarchical relationship. Selection of such an icon results in the display of the associated adjoining desktop environment. A multilevel tree structure hierarchical map may be selectively displayed in response to a user input to the system. The hierarchial map includes multiple nodes which each correspond to an associated desktop environment and the node which corresponds to the currently displayed desktop environment is graphically highlighted. User selection of a node within the hierarchical map then results in the direct display of the associated desktop environment, without requiring traversal of the hierarchical relationship of desktop environments within the data processing system.

## Description

### BACKGROUND OF THE INVENTION

### Technical Field:

The present invention relates in general to an improved data processing system and in particular to an improved data processing system which includes multiple hierarchically related desktop environments. Still more particularly, the present invention relates to an improved method and system for managing multiple hierarchically related desktop environments within a data processing system without requiring traversal of the hierarchical relationship to access each desktop environment.

### Description of the Related Art:

Modern data processing systems often incorporate the so-called "desktop" metaphor in order to provide an intuitive user friendly interface. Such interfaces, often referred to as "graphic user interface" (GUI) provide an analogy to those users familiar with office systems without requiring arcane and complex commands and command sequences.

In an electronic desktop environment the computer screen provides a visual indication of an electronic desktop which is populated utilizing multiple data processing system objects. Such objects, typically miniature graphic representations referred to as "icons," serve to illustrate the various files, applications, documents and accessory devices present within the modern electronic desktop environment. Thus, for example, applications, documents and the like are typically illustrated as file icons which may be manipulated utilizing a graphical pointing device, such as a mouse. By utilizing well-known techniques such as "drag and drop" documents may be manipulated utilizing multiple techniques. For example, a document icon may be placed within a folder icon, dropped on a printer icon or a shredder icon and the resultant outcome will be an electronic analogy for the physical operation illustrated.

While the electronic desktop environment provides a simple, intuitive and graphic technique whereby users may perform operations within a computer the complexity of the modern workplace soon outstrips the capability of such an interface to provide an electronic analogy. Thus, modern data processing systems often utilize multiple electronic desktop environments. That is, desktop environments which include different objects and iconic representation of various accessory devices may be separated and accessed individually. Thus, a desktop environment which is utilized in conjunction with electronic publishing may include various drawing or computer aided design programs in conjunction with a specialized printer utilized for high resolution graphics applications. Simultaneously a desktop environment may be provided which incorporates various accounting or spreadsheet applications in conjunction with a printer capable of providing a greater than normal number of columns, facilitating the printing of spreadsheets. Those skilled in the art will appreciate that the provision of multiple accessory devices within such desktop environments is typically accomplished by coupling a computer to a data processing system network in which multiple printers or the like may be accessed by a single computer.

Thus, it should be apparent that a need exists for a method and system whereby multiple desktop environments may be efficiently managed within a data processing system.

### SUMMARY OF THE INVENTION

It is therefore one object of the present invention to provide an improved data processing system.

It is another object of the present invention to provide an improved data processing system which includes multiple hierarchically related electronic desktop environments.

It is yet another object of the present invention to provide an improved method and system for facility desktop organization and for managing multiple hierarchically related desktop environments within a data processing system without requiring traversal of the hierarchial relationship to surface a selected desktop environment.

The foregoing objects are achieved as is now described. The method and system of the present invention may be utilized to manage multiple desktop environments within a data processing system which includes a display, a graphical pointing device, and multiple hierarchically related electronic desktop environments wherein each desktop environment includes multiple files and/or applications and graphic representations of various accessory devices which are available within that desktop environment. A selectable icon is displayed within each desktop environment which represents each adjoining desktop environment below the current desktop environment within the hierarchical relationship. Selection of such an icon results in the display of the associated adjoining desktop environment. A multilevel tree structure hierarchical map may be selectively displayed in response to a user input to the system. The hierarchial map includes multiple nodes which each correspond to an associated desktop environment and the node which corresponds to the currently displayed desktop environment is graphically highlighted. User selection of a node within the hierarchical map then results in the direct display of the associated desktop environment, without requiring traversal of the hierarchical relationship of desktop environments within the data processing system.

The above as well as additional objectives, features, and advantages of the present invention will become apparent in the following detailed written description.

### BRIEF DESCRIPTION OF THE DRAWINGS

The novel features believed characteristic of the invention are set forth in the appended claims. The invention itself, however, as well as a preferred mode of use, further objectives and advantages thereof, will best be understood by reference to the following detailed description of an illustrative embodiment when read in conjunction with the accompanying drawings, wherein:
- **Figure 1**: illustrates a pictorial representation of a data processing system which may be utilized to implement the method and system of the present invention;
- **Figure 2**: is a pictorial representation of a computer display screen illustrating a desktop environment in accordance with the method and system of the present invention;
- **Figure 3**: is a pictorial representation of a computer display screen illustrating a second desktop environment in accordance with the method and system of the present invention;
- **Figure 4**: is a pictorial representation of a computer display screen illustrating a third desktop environment in accordance with the method and system of the present invention;
- **Figure 5**: is a pictorial representation of a computer display screen illustrating a multilevel hierarchical map within the third desktop environment of **Figure 4** in accordance with the method and system of the present invention;
- **Figure 6**: is a high level logic flowchart which illustrates a process for managing multiple hierarchically related electronic desktop environments within a data processing system in accordance with the method and system of the present invention; and
- **Figure 7**: is a high level logic flowchart illustrating a process for managing multiple hierarchically related electronic desktop environments in accordance with the method and system of the present invention.

### DETAILED DESCRIPTION OF PREFERRED EMBODIMENT

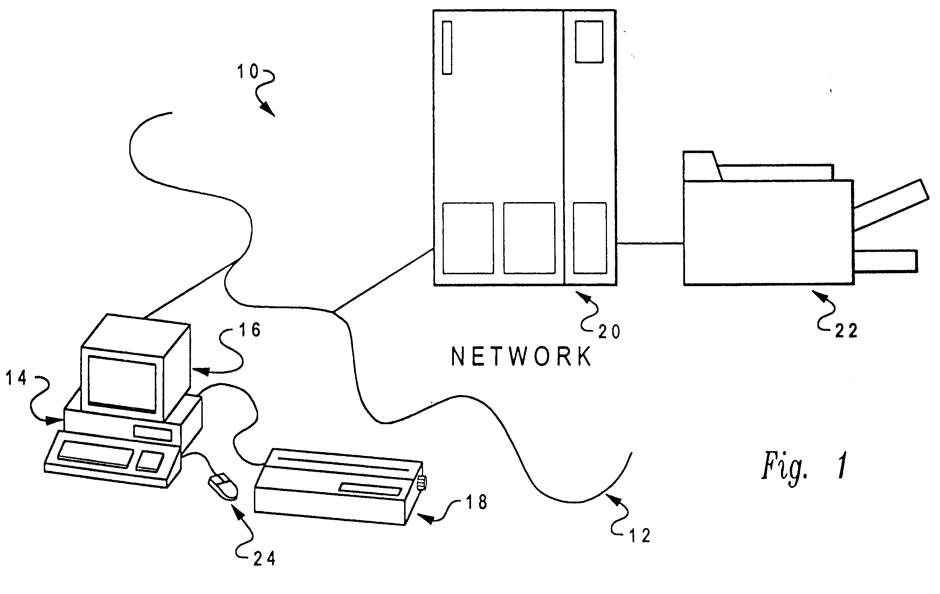

With reference now to the figures and in particular with reference to **Figure 1**, there is illustrated a pictorial representation of a data processing system **10** which may be utilized to implement the method and system of the present invention. As illustrated, data processing system **10** includes a network **12** which serves to couple personal computer **14** to mainframe computer **20**. As is common with such computers, personal computer **14** preferably includes a display device **16** and a graphical pointing device **24**. In the depicted embodiment of the present invention personal computer **14** may be implemented utilizing any suitable personal computer such as the International Business Machines Corporation PS/2 personal computer and electronic pointing device **24** may be implemented utilizing a so-called "mouse." Additionally, as illustrated within **Figure 1**, personal computer **14** may include a printer **18** which is coupled directly to personal computer **14**.

As is common within electronic networks of the type illustrated within **Figure 1**, network **12** may include a mainframe computer **20** which serves to provide various services and applications to multiple personal computers, such as personal computer **14**. Coupled to mainframe computer **20** is a high resolution laser printer **22**. Thus, those having ordinary skill in the art will appreciate that personal computer **14** may incorporate multiple electronic desktop environments. For example, an accounting environment may be present within personal computer **14** and this environment will preferably include various spreadsheet and accounting software applications. Output from these applications is preferably coupled to printer **18** which, in the depicted embodiment of the present invention, is preferably a printer capable of creating an output having a larger than normal number of columns. Such a printer typically is utilized to facilitate the printing of complex spreadsheets or similar documents.

In addition, a publishing desktop environment may be present within personal computer **14** which requires the utilization of a higher resolution printer. Thus, high resolution laser printer **22** within network **12** may be available for utilization within a publishing desktop environment within personal computer **14** by coupling that printer to personal computer **14** via network **12**, in a manner well known to those having ordinary skill in the art.

Thus, it may be seen that personal computer **14** may incorporate multiple electronic desktop environments in which various documents and/or applications are present within each desktop environment and wherein multiple diverse accessory devices such as printer **18** and printer **22** may be available within different desktop environments. In the depicted embodiment of the present invention, each of the multiple electronic desktop environments is interrelated in a hierarchical relationship, such that each desktop environment may include one or more "child" desktop environments and a "parent" desktop environment.

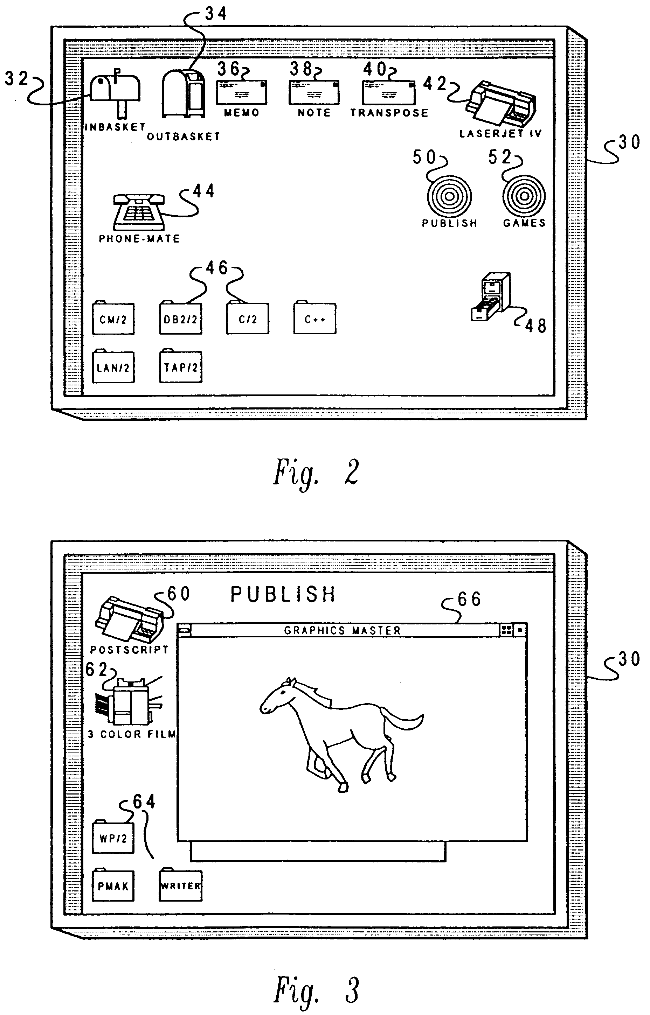

Referring now to **Figure 2** there is illustrated a pictorial representation of a computer display screen which depicts a primary desktop environment in accordance with the method and system of the present invention. As illustrated, computer display screen **30** graphically depicts multiple objects and/or iconic representations of various accessory devices which are available within that desktop environment. Thus, in-basket icon **32** and out-basket icon **34** are present within the primary desktop environment illustrated within display screen **30** of **Figure 2**. E-mail objects **36**, **38** and **40** are also illustrated therein. Various accessory devices which are available within the desktop environment depicted within display screen **30** of **Figure 2** are also graphically represented. Thus, printer icon **42** and phone icon **44** are depicted within this desktop. Multiple files, such as those indicated at reference numeral **46**, and a file cabinet icon **48** are also illustrated.

As illustrated, two "black-hole" icons **50** and **52** are depicted within the desktop environment of computer display screen **30** of **Figure 2**. Each of these "black-hole" icons illustrates the existence of an adjoining electronic desktop environment which is present at an adjoining level within the hierarchically related desktop environments installed within personal computer **14**. Thus, by selecting either "black-hole" icon **50** or **52** a second electronic desktop environment may be displayed within computer display screen surface in a manner typically referred to within the art as "surfaced." Of course, alternate graphic indications may also be utilized, such as "door" or "window" icons, or alternatively various alternate user interface techniques may be utilized to surface an alternate desktop environment, such as a "hot key" sequence or mouse button sequence.

With reference now to **Figure 3**, there is depicted a pictorial representation of computer display screen **30** after selection of "black-hole" icon **50**. As depicted herein, the second desktop environment has been "surfaced," which include the "publishing" desktop environment. As depicted within this desktop environment two higher resolution printing devices are graphically represented utilizing iconic representations thereof. Thus, postscript printer **60** and color printer **62** are graphically represented within this desktop environment. Multiple applications **64** are also illustrated as well as an image window **66** which depicts a publishing document being utilized by the user. As those skilled in the art will note upon reference to **Figure 3**, no "black-hole" icons are illustrated within this desktop environment. Thus, no adjoining desktop environments are present which adjoin the publishing desktop environment while descending the hierarchial relationship of desktop environments within personal computer **14**. Thus, upon the closing of this desktop environment the computer display screen will return to the display depicted within **Figure 2** and described above.

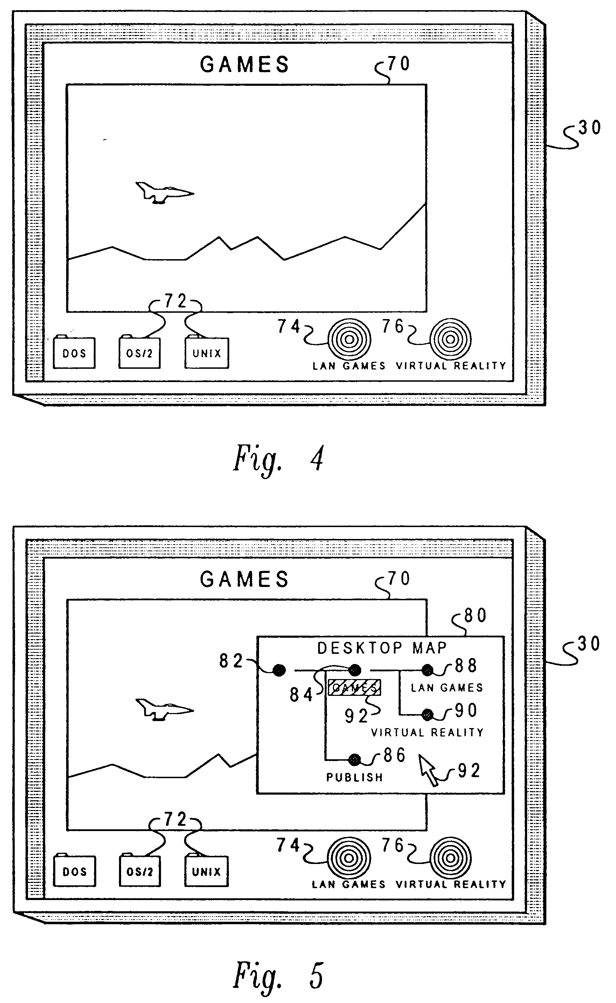

Referring now to **Figure 4**, there is depicted a pictorial representation of a computer display screen which illustrates a third desktop environment in accordance with the method and system of the present invention. This desktop environment may be "surfaced" in a manner well known to those having ordinary skill in the prior art by closing the publishing desktop environment depicted within **Figure 3** and thereafter selecting black-hole icon **52** (see **Figure 2**) within the primary desktop environment.

As illustrated within **Figure 4**, computer display screen **30** now includes a game window **70** along with multiple files and/or applications **72**. Two "black-hole" icons **74** and **76** are present within this desktop environment. Thus, two electronic desktop environments exist which adjoin the games desktop environment while descending through the hierarchical relationship of desktop environments within computer **14**, as illustrated within **Figure 4**.

Next, with reference to **Figure 5** there is illustrated a multilevel hierarchical map which is depicted within the third desktop environment of **Figure 4** in accordance with the method and system of the present invention. Thus a hierarchical map window **80** may be selectively displayed within computer display **30** at any point within any of the multiple hierarchically related desktop environments within personal computer **14**. In the depicted embodiment of the present invention the display of hierarchical map window **80** is preferably initiated by an input from a user of a so-called "hot-key" sequence. That is, a sequence of multiple keys which are struck simultaneously and which are assigned a specific meaning within personal computer **14**.

In accordance with an important feature of the present invention hierarchical map window **80** preferably includes a multilevel tree structure hierarchical map which depicts each of the multiple hierarchical related desktop environments within personal computer **14**. Thus, node **82**, the primary node of the multilevel tree structure hierarchical map preferably illustrates the primary desktop environment. Nodes **84**, **86**, **88** and **90** each depict alternate desktop environments and the manner in which those desktop environments are hierarchically related within personal computer **14**.

In the depicted embodiment of the present invention each node has associated therewith textual indicia which sets forth which specific desktop environment is associated with each node. Additionally, in accordance with an important feature of the present invention, the node identifier set forth at reference numeral **92** is graphically highlighted, indicating that this node is the presently "surfaced" desktop environment within computer display screen **30**. Of course, those having ordinary skill in the art will appreciate that this graphic indication may be accomplished utilizing multiple different techniques such as, for example, "blinking" the node associated with this desktop environment or changing the color of that node.

Upon reference to the foregoing those skilled in the art will appreciate that by providing hierarchical map window **80** which includes a map of each of the hierarchically related desktop environments within personal computer **14** the existence of multiple desktop environments and the relationship within the hierarchical relationship of each desktop environment to the present desktop environment may be efficiently obtained. Additionally, in a manner which will be explained in greater detail herein, hierarchical map window **80** may be utilized to permit the user to directly select a particular desktop environment utilizing a mouse pointer **92**.

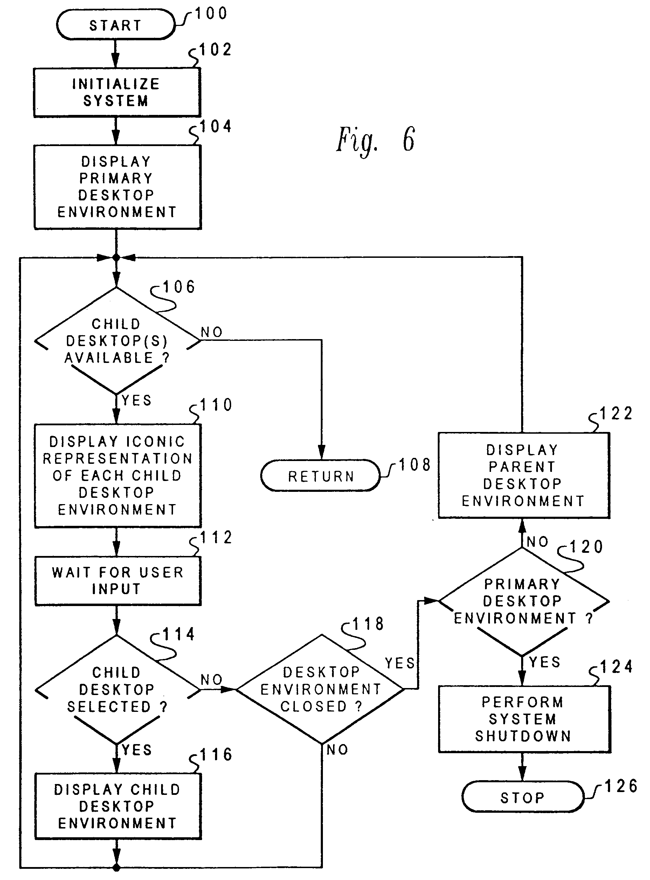

Referring now to **Figure 6**, there is depicted a high level logic flowchart which illustrates a process for managing multiple hierarchically related electronic desktop environments within a data processing system in accordance with the method and system of the present invention. The process depicted within **Figure 6** may be implemented utilizing suitable software operating within personal computer **14** in a manner well known to those having ordinary skill in the art.

As illustrated, the process of **Figure 6** begins at block **100** and thereafter passes to block **102**. Block **102** illustrates the initialization of the system following the application of electrical power in a manner well known to those having ordinary skill in the art. Next, block **104** illustrates the displaying of the primary desktop environment in a manner similar to that illustrated within **Figure 2**.

Next, the process passes to block **106**. Block **106** illustrates a determination of whether or not a child desktop environment is available. By "child" desktop environment what is meant is a desktop environment which is adjoining the "parent" desktop environment the hierarchical relationship. If no "child" desktop environment is available, the process passes to block **108** and returns.

Still referring to block **106**, in the event a "child" desktop environment is available within the system, the process passes to block **110**. Block **110** illustrates the displaying of an iconic representation of each "child" desktop environment within the current desktop environment. An iconic representation for each "child" desktop environment may be presented utilizing a graphic representation of a "door" a "window," or a "black-hole" icon in the manner depicted in the present application. Therefore, the process passes to block **112**, which illustrates waiting for an appropriate user input.

Next, the process passes to block **114** which illustrates a determination of whether or not the iconic representation of a "child" desktop environment has been selected. If a "child" desktop environment has been selected the process passes to block **116** which depicts the displaying of a "child" desktop environment in the manner illustrated within **Figures 3-5**. Thereafter, the process passes to block **106** to once again determine whether or not a "child" desktop environment is available for the present desktop environment, and the process continues in an iterative fashion.

Referring again to block **114** in the event the "child" desktop environment has not been selected the process passes to block **118**. Block **118** illustrates a determination of whether or not the current desktop environment has been closed and if not, the process returns to block **106** in an iterative fashion to await the selection of a "child" desktop environment or the closing of the current desktop environment in the manner described above.

Still referring to block **118**, in the event the closing of the present desktop environment is detected, the process passes to block **120**. Block **120** illustrates a determination of whether or not the present desktop environment is the primary desktop environment. If not, the process passes to block **122** which illustrates the displaying of the "parent" desktop environment for the present desktop environment and the process then returns, in an iterative fashion to block **106**. Thus, as described within the present application and as is common in the prior art, the closing of a desktop environment results in a return to the "parent" desktop environment for the closed desktop environment.

By "parent" desktop environment what is meant is the desktop environment which is directly above the current desktop environment in the hierarchical relationship.

Referring again to block **120**, in the event the primary desktop environment is the current desktop environment and the user indicates the closing of that desktop environment the process passes to block **124**. Block **124** illustrates the performing a system shutdown. A system shutdown involves saving and closing any open data or document files and the closing of any open objects or applications that should not be automatically restarted for the next time the primary desktop environment is opened. The process then ends, as depicted within block **126**.

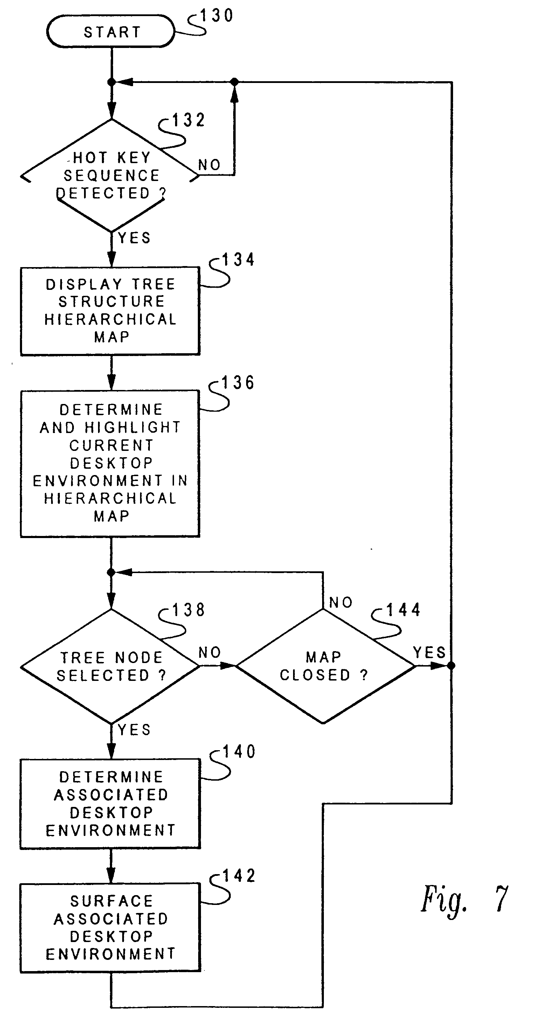

Finally, with reference to **Figure 7**, there is illustrated a high level logic flowchart which depicts a process for managing multiple hierarchically related electronic desktop environments in accordance with the method and system of the present invention. As above, this process may be implemented utilizing suitable software within personal computer **14** in a manner which should be apparent to those having ordinary skill in the art upon reference to the foregoing specification.

As depicted within **Figure 7** this process begins at block **130** and thereafter passes to block **132**. Block **132** illustrates a determination of whether or not a so-called "hot-key" sequence has been detected. Those having ordinary skill in the art will appreciate that a "hot-key" sequence is a simultaneous actuation of multiple keys which has been assigned special significance within a data processing system. Alternately, a menu selection which is graphically indicated utilizing a mouse pointer or the cursor may also be utilized to initiate display of a hierarchical map, as described herein. In the event a "hot-key" sequence has not been detected the process merely iterates until such time such a sequence is detected.

Still referring to block **132** after such a sequence has been detected the process passes to block **134**. Block **134** illustrates the displaying of a tree structure hierarchical map such as hierarchical map window **80** within **Figure 5**. Next, the process passes to block **136** which illustrates the determining of the current desktop environment within the hierarchical map and the highlighting of the node or node identification associated with that desktop environment. Block **138** then illustrates the waiting for an appropriate user input.

Next, the process passes to block **140**. Block **140** illustrates a determination of whether or not a tree node has been selected. Upon reference to the foregoing those having ordinary skill in the art will appreciate that tree nodes may be selected utilizing a graphical pointing device, such as mouse pointer **92**, or by utilizing a cursor, a light pen or other suitable pointing device. In the event a tree node has been selected, block **142** next illustrates the determination of the associated desktop environment which corresponds to that tree node within the hierarchical map. The process then passes to block **144** which depicts the surfacing of the associated desktop environment in a direct manner, without requiring traversal of the hierarchical relationship of desktop environments in a manner such as that known in the prior art. Thereafter, block **146** illustrates the setting of the appropriate accessories, drivers, et cetera for the surfaced desktop.

Referring back to block **140**, in the event a tree node has not been selected the process passes to block **148**. Block **148** illustrates a determination of whether or not the hierarchical map window is to be closed and if so, the process passes to block **150**, and terminates. Alternately, in the event the hierarchical map window is not to be closed the process returns to block **138**, in an iterative fashion, to await further user input. Those having ordinary skill in the art will appreciate that the hierarchical map window may be closed utilizing an alternate "hot-key" sequence or other command sequences. For example, hierarchical map window **80** may be provided within a command bar and the "Exit" command may be graphically selected utilizing mouse pointer in a manner well known in the art.

Upon reference to the foregoing those skilled in the art will appreciate that the Applicants herein have provided a method and system whereby the management of multiple hierarchically related electronic desktop environments may be efficiently accomplished without requiring traversal of the entire hierarchical relationship to surface a desired desktop environment.

While the invention has been particularly shown and described with reference to a preferred embodiment, it will be understood by those skilled in the art that various changes in form and detail may be made therein without departing from the spirit and scope of the invention.

## Claims

1. A method for management of electronic desktop environments within a data processing system having a display device, a graphical pointing device and multiple hierarchically related electronic desktop environments wherein each desktop environment includes a display of a plurality of data processing system objects and iconic representations of various accessory devices which are available within that desktop environment, said method comprising the steps of:
in response to a user input to said data processing system selectively displaying within said data processing system a multilevel hierarchical map which includes an indication of each desktop environment within said data processing system; and
displaying a selected desktop environment within said data processing system in response to a graphic selection by a user of an indication of said selected desktop environment within said multilevel hierarchical map.

2. The method for management of electronic desktop environments within a data processing system according to Claim 1, wherein said step of selectively displaying within said data processing system a multilevel hierarchical map which includes an indication of each desktop environment within said data processing system comprises the step of selectively displaying within said data processing system a multilevel tree structure hierarchical map which includes an indication of each desktop environment within said data processing system.

3. The method for management of electronic desktop environments within a data processing system according to Claim 2, wherein said step of selectively displaying within said data processing system a multilevel tree structure hierarchical map which includes an indication of each desktop environment within said data processing system further comprises the step of selectively displaying within said data processing system a multilevel tree structure hierarchical map which includes a plurality of nodes, each node indicative of an associated desktop environment.

4. The method for management of electronic desktop environments within a data processing system according to Claim 3, further including the step of the graphically highlighting a selected node among said plurality of nodes wherein said selected node corresponds to a currently displayed desktop environment.

5. The method for management of electronic desktop environments within a data processing system according to Claim 1, further including the step of displaying within each desktop environment an iconic representation of each adjoining desktop environment within the hierarchical relationship of desktop environments within said data processing system.

6. The method for management of electronic desktop environments within a data processing system according to Claim 5, further including the step of displaying an adjoining desktop environment in response to a user selection of an iconic representation thereof.

7. A system for management of electronic desktop environments within a data processing system having a display device, a graphical pointing device and multiple hierarchically related desktop environments wherein each desktop environment includes a display of a plurality of data processing system objects and iconic representations of various accessory devices which are available within that desktop environment, said system comprising:
means for selectively displaying within said data processing system a multilevel hierarchical map which includes an indication of each desktop environment within said data processing system in response to a user input to said data processing system; and
means for displaying a selected desktop environment within said data processing system in response to a graphic selection by a user of an indication of said selected desktop environment within said multilevel hierarchical map.

8. The system for management of electronic desktop environments within a data processing system according to Claim 7, wherein said means for selectively displaying within said data processing system a multilevel hierarchical map which includes an indication of each desktop environment within said data processing system comprises means for selectively displaying within said data processing system a multilevel tree structure hierarchical map which includes an indication of each desktop environment within said data processing system.

9. The system for management of electronic desktop environments within a data processing system according to Claim 8, wherein said means for selectively displaying within said data processing system a multilevel tree structure hierarchical map which includes an indication of each desktop environment within said data processing system further comprises means for selectively displaying within said data processing system a multilevel tree structure hierarchical map which includes a plurality of nodes, each node indicative of an associated desktop environment.

10. The system for management of electronic desktop environments within a data processing system according to Claim 9, further including means for graphically highlighting a selected node among said plurality of nodes wherein said selected node corresponds to a currently displayed desktop environment.

11. The system for management of electronic desktop environments within a data processing system according to Claim 7, further including means for displaying within each desktop environment an iconic representation of each adjoining desktop environment within the hierarchical relationship of desktop environments within said data processing system.

12. The system for management of electronic desktop environments within a data processing system according to Claim 11, further including means for displaying an adjoining desktop environment in response to a user selection of an iconic representation thereof.
